# FASCICULE DE BREVET EUROPEEN

(11) **EP 0 326 452 B1**
(45) Date de publication et mention de la délivrance du brevet: **12.04.1995**
(21) Numéro de dépôt: 89400106.4
(22) Date de dépôt: 12.01.1989
(51) Int. Cl.: G01B 5/00, B60S 5/00, B21D 1/12, B66F 7/02

(54) **Instrument de contrôle et de mesure des caisses de véhicules par poutre, réglets, et piges suspendues**
Kontroll- und Messinstrument mit Balken, Setzlinien und Hängepeiler für Wagenkasten
Control and measuring instrument with beam, setting rules and suspended stickers for body of vehicles

(30) Priorité: 12.01.1988 FR 8800267
(43) Date de publication de la demande: 02.08.1989
(73) Titulaire: Deleuze, Jean-Michel, F-75017 Paris (FR)
(72) Inventeur: Deleuze, Jean-Michel, F-75017 Paris (FR)

(56) Documents cités:
- EP-A- 0 072 725
- EP-A- 0 140 976
- EP-A- 0 215 512
- FR-A- 2 547 047
- FR-A- 2 609 794
- PATENT ABSTRACTS OF JAPAN, vol. 10, no. 266 (P-496)(2322), 11 septembre 1986 & JP-A-6191501
- PATENT ABSTRACTS OF JAPAN, vol. 8, no. 214 (P-304)(1651), 29 septembre 1984 & JP-A-5997001

## Description

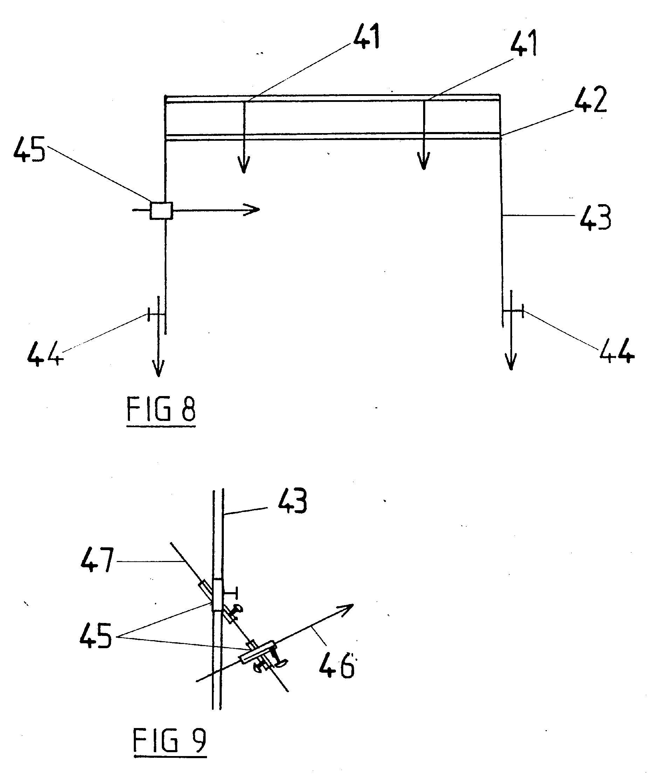

La présente invention est constituée d'une poutre générale de mesure reposant dans l'axe sous la caisse d'un véhicule supportant des bras-réglets perpendiculaires confronté à des piges rondes suspendues, situées aux points remarquables à vérifier de cette caisse (figure7). Selon la figure 7 cette poutre (3) repose sur 2 supports transversaux (1) eux-même accrochés au véhicule le plus souvent par 4 pinces et vis filetées (2) serrant les lèvres de bas de caisse (4) aux 4 coins de la caisse (extrémités gauches et droites avant et arrière des lèvres).

Selon une variante la fixation au véhicule se fait par ventouses fixées aux portières et vis filetées se reliant à un cadre support.

Traditionnellement les caisses à contrôler des véhicules reposaient sur des bâtis fixes très rigides appelés "marbres", en appui sur des ferrures propres au modèle à contrôler ou polyvalentes. D'autres systèmes sont basés sur le principe d'une poutre générale de mesure comportant des piges remontantes vers les points remarquables de la caisse. Un système est basé sur le principe d'un rayon laser permettant un relevé de positionnement de piges suspendues sous un véhicule horizontal.

Ainsi peut-on citer la demande FR-2547047 qui est une règle de mesure à piges remontantes et directement posée au sol, la demande EP-A-72725 qui est une pince réglable permettant de maintenir une caisse de véhicule sur un marbre, la demande EP-A-107538 pour le contrôle des points de suspension avant; la demande EP-A-140976 présente un ensemble de solutions destin en principe à compenser les déviations verticales de piges pendues dues à la perte d'horizontalité possible de la caisse à contrôler pendant son vérinage.

La présente invention n'exige ni marbre, ni ferrures, ni véhicule horizontal, car fixée au véhicule lui-même et est amovible si besoin pendant le travail de vérinage.

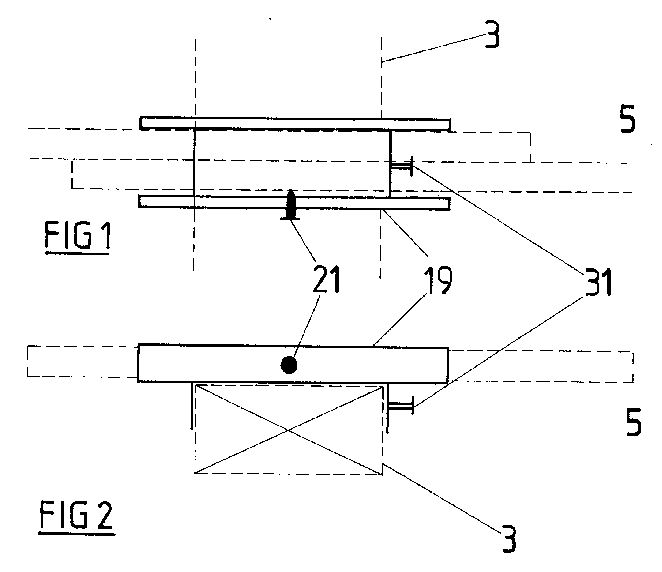

Selon les figures 1 et 2, les réglets s'échelonneront le long de la poutre (3) perpendiculairement (selon les indications des fiches techniques par type de véhicule) et sont reliés à la poutre par un dispositif d'équerrage (19) serrant la poutre par une vis (31) et serrant par ailleurs les réglets eux-mêmes deux par deux par une autre vis (21).

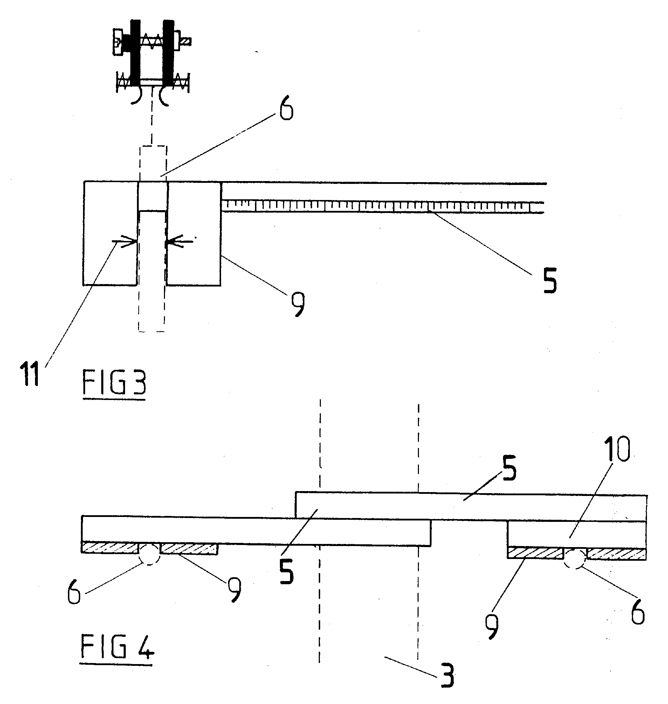

Selon la figure 4 les réglets (5) droite et gauche sont différents afin de permettre un rattrapage de leur épaisseur et un positionnement des plaques de contrôle (9) (situées en bout des réglets) symétriques à droite et à gauche par rapport à la poutre (3). La symétrie est habituelle mais non obligatoire.

Il est à noter que l'ensemble des deux réglets plus le dispositif d'équerrage-fixation est retourné selon qu'il est utilisé sur un véhicule contrôlé levé à l'avant ou à l'arrière, afin de permettre un appui des piges contre les plaques de contrôle.

Selon la figure 3, chaque réglet (5) comprend donc une section en principe carrée avec bande millimétrée avec 2 plaques de contrôle en bout (9). Ces plaques étant parallèles entre elles et laissant un espace égal à une largeur de pige suspendue (6).

Selon la représentation de la figure 4, les réglets étant positionnés 2 par 2, le réglet situé en arrière du premier comporte en plus une cale (10) entre ses plaques et son corps de réglet égale à une largeur de réglet.

Les plaques de contrôle (9) sont en plus positionnées de telles façons que leur affleurement correspond à l'axe longitudinal d'une pige suspendue (6) correctement positionnée.

Une pige correctement positionnée (6) vient se placer entre les 2 plaques de contrôle (9), s'appuie sur le réglet (5) ou sur la cale additionnelle (10) (selon que le réglet est droite ou gauche par rapport à la poutre) sa demi épaisseur venant en affleurement tout le long des 2 plaques de contrôle (9).

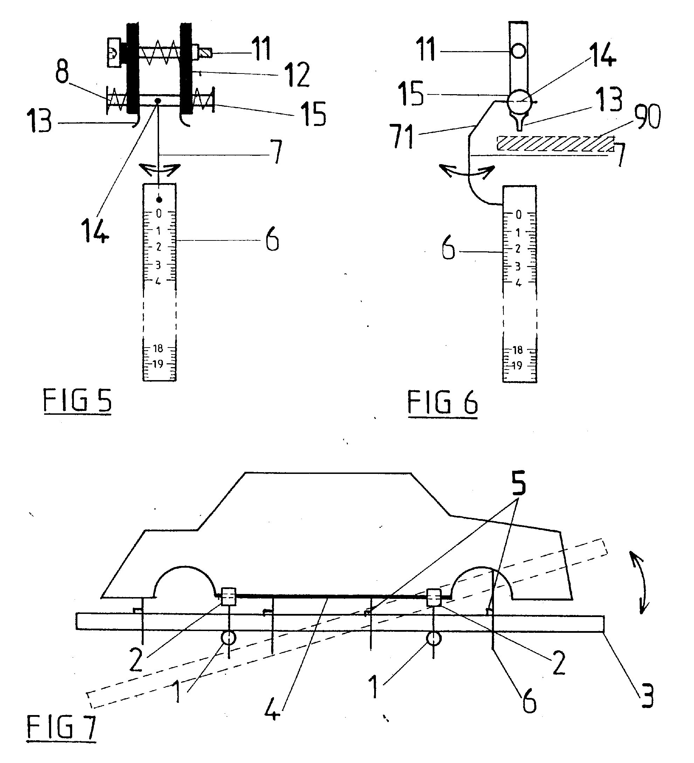

Selon les représentations des figures 5 et 6, la pige suspendue (6) est normalement de section ronde, sans que cela soit absolument obligatoire, comprend une bande millimétrée à son pourtour, et se trouve suspendue aux points remarquables de la caisse par une tige oscillante en forme (7) (soudée sur la pige, oscillante 2 axes sur la pince) et par une pince particulière.

La fonction de la pince est de permettre soit une fixation par serrage sur écrou ou boulon au moyen de l'écrou-boulon (11), soit par retournement de la pince et écartement forcé par un ressort une fixation sur un trou (de longeron par exemple), à l'aide des lèvres (13).

La pince se relie à la tige oscillante en forme (7) par un axe tournant percé en son milieu (15) d'un trou (14) où vient se loger la tige oscillante (7) ainsi mobile et constituant un 2 ème axe de rotation perpendiculaire par rapport au premier axe (15) de la pince.

Le premier axe (15) de la pince est relié à la pince elle-même par 2 ressorts égaux à droite et à gauche (8) extérieurs ou intérieurs selon une variante aux corps de pince permettant au trou (14) de la tige oscillante de se retrouver toujours centré par rapport aux corps de pince lorsque l'on resserre cette dernière en agissant sur l'écrou-boulon (11).

Le 2 ème axe de rotation (14) de la tige oscillante (7) permet au corps de pince de se fixer sur les différents pans des écrous sans pour autant modifier la position de cette tige oscillante et permet aussi dans certains cas un balancement général de la pige (6).

Le 1er axe de rotation (15) de la tige oscillante permet à la tige un balancement en attente de repos sur le réglet ou un évitement de réglets lorsqu'on retire la poutre générale de mesure (point (3) figure 7).

La tige oscillante à une forme dont les caractéristiques sont l'entrée dans le 2 ème axe de rotation (14), sa fixation ou soudure sur la pige (6) et un profil (7) permettant à la pince de se fixer sur des écrous ou boulons en permettant d'éviter des goussets ou renforts de caisse (90) situés sous ces écrous ou boulons. Selon la figure 6, ce profil comporte un coude tronqué (71). Selon la figure 7 , la poutre de mesure (3) reposant sur 2 supports transversaux (1) voit ces supports transversaux fixés à la caisse du véhicule par 4 pinces (2) serrant les bas de lèvres (4) en extrémité de ces bas de lèvres (droites-gauche-avant-arrière).

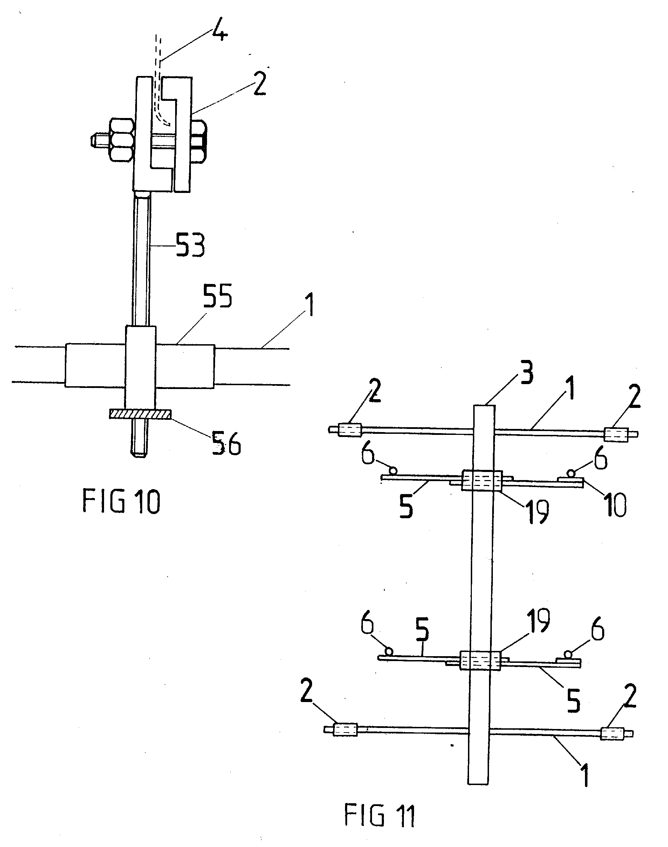

Selon la figure 10, ces pinces (2) ont un profil de serrage évitant le nervurage des bas de caisse (4). Elles se relient aux 2 supports transversaux (1) par une vis filetée soudée (53) et un fourreau mobile et réglable (55) le long des supports transversaux.

Le réglage fin de mise en assiète de la poutre générale de mesure se fait donc par un écrou (56) situé sur cette vis filetée. On a donc au total 4 pinces, 4 vis filetées, 4 écrous, 4 fourreaux, 2 supports transversaux pour la poutre.

Selon une variante les 2 supports transversaux sont reliés au véhicule par 2 supports longitudinaux, eux-même repris chacun par un fourreau, une grande vis filetée et des ventouses venant sur le flan des portières du véhicule.

Selon la représentation particulière de la figure 8, le dispositif (43) présenté est particulièrement destiné à s'appuyer sur les têtes d'amortisseur avant de suspension dites de type MAC PHERSON par l'intermédiaire de pointaux (41), mobiles eux-même le long d'une bande graduée (42). Ce dispositif se coince contre le sol par l'intermédiaire de pieds réglables (44) évitant le basculement et le positionnement de (43) perpendiculairement à la poutre générale de mesure (point (3) - figure 7). Par ailleurs le dispositif (43) supporte en (45) un bati annexe mobile en 3 dimensions permettant le relevé d'un point dans l'espace. Selon la figure 9 ce bati annexe mobile comprend en (45) 3 serrages par vis de cadres ou réglets (46), l'un des serrages correspond la cote de hauteur le long de (43) , l'autre serrage à un écartement en largeur par l'intermédiaire d'un réglet (47), le 3 ème serrage tenant un réglet (46) pour la cote de profondeur.

La planche 1 représente en figure 1 le système d'équerrage des réglets par rapport à la poutre générale de mesure, la figure 2 étant une vue latérale de la figure 1.

La planche 2 représente en figure 3 une pince de saisie de trou, écrou, boulon, assortie de sa pige, confrontée au réglet de mesure.

En figure 4, on trouve le positionnement droite et gauche de 2 réglets vus d'en haut sans représentation du dispositif d' équerrage sur la poutre.

La planche 3 représente en figure 5 une pince et sa pige la figure 6 étant le même dispositif vu d'un autre coté (profil).

La figure 7 représente l'implantation générale de la poutre de mesure sous une carrosserie.

La planche 4 représente le système général de relevé d'une suspension avant, notamment MAC PHERSON (figure8), la figure 9 n'étant une précision d'un dispositif de la figure 8.

La planche 5 représente en figure 10 la pince fixée aux lèvres de bas de caisse reliée aux supports transversaux de la poutre générale de mesure.

En figure 11 on trouve une implantation vue d'en haut de la poutre générale de mesure, la mise en place de 2 jeux de 2 réglets, et la position des supports transversaux de poutre.

L'ensemble de l'invention précédente est fabriqué par sciages mises aux cotes, contre collages de bandes graduées, soudure, perçages de passages de vis et écrous, vérification de perpendicularités et appuis des pièces les unes par rapport aux autres, taraudages et filetages, controles de conformité par rapport au modèle. Des gabarits de perçages de mise en forme, de soudure sont systématiquement utilisés . Les flèches d'index et les avertissements ou précautions d'emploi sont, par des étiquettes, collés en fin de fabrication.

## Revendications

1. Dispositif de contrôle et de mesure de caisse de véhicule constitué d'une poutre axiale (3) reposant sur deux supports transversaux (1), des bras-réglets (5) échelonnés perpendiculairement le long de la poutre axiale, des piges pendues (6) venant perpendiculairement en appui sur les bras-réglets et des logements exacts aménagés sur les bras-réglets et accueillant les piges pendues selon des angles droits chaque fois qu'un qu'un point remarquable contrôlé est positionné conformément à son positionnement théorique, caractérisé par le fait que les piges pendues sont graduées et munies d'une liaison rigide avec un dispositif particulier lui permettant des capacités d'oscillation en double axe, ce dispositif particulier étant lui-même relié à une pince polyvalente centrée ou autocentrée pouvant travailler tant en serrage qu'en écartement et se fixant sur les points remarquables à contrôler de la caisse.

2. Dispositif selon la revendication 1 caractérisé en ce que ce dispositif particulier est une tige en forme (7) soudée à la pige et dont le profil permet d'éviter des goussets ou renforts de caisse quand la pince polyvalente est elle-même positionnée au-dessus sur les points remarquables à contrôler.

3. Dispositif selon la revendication 1 caractérisé par le fait que la tige en forme peut librement tourner dans un trou (14) ménagé transversalement au milieu d'un axe (15) lui-même tournant et traversant les 2 corps de la pince.

4. Dispositif selon les revendications 1 et 3, de centrage ou d'auto-centrage de la pince polyvalente caractérisé par le fait que l'axe (15) tournant sur lui-même de la pince traverse les 2 corps principaux de pince et se trouve muni soit à l'extérieur soit à l'intérieur de la pince de 2 ressorts parfaitement symétriques et équivalents ou de tout système de centrage ou d'auto-centrage ayant pour fonction en appuyant sur des alésages de l'axe de toujours centrer le milieu de cet axe par rapport aux 2 corps de pince, quel que soit le positionnement de ces corps.

5. Dispositif selon la revendication 1 caractérisé par les 2 corps de pince soit en serrant leur côté mâchoires par action d'une vis, soit travaillant en écartement forcé sous la pression d'un ressort ou de tout autre système mécanique situé entre les 2 corps de pince et permettant, après retournement de la pince, aux 2 corps de pince de présenter des lèvres d'appui aux bords de trous de contrôle de longerons.

6. Dispositif selon la revendication 1 caractérisé en ce que les logements permettant d'accueillir chaque pige pendue sur chaque bras-réglet échelonné perpendiculairement le long de la poutre axiale sont constitués chacun de 2 plaques de contrôle épaisses espacées d'un diamètre de pige et fixées sur un côté des bras-réglets à section carrée ou rectangulaire permettant à la fois à la pige de se loger, à l'opérateur de vérifier tout à la fois la perpendicularité pige/bras, que le plan des plaques correspond à l'axe longitudinal de la pige, la valeur lue sur la pige face à un index prévu sur les plaques, permettant enfin automatiquement un échappement possible de la pige et de sa tige oscillante en cas d'amovibilité de la poutre axiale et de ses bras-réglets.

7. Dispositif selon les revendications 1 et 6 caractérisé par l'épaisseur des plaques de contrôle évitant à la pige pendue de quitter facilement son logement si la caisse de véhicule est positionnée en devers par rapport au plan horizontal mais aussi par la conception du dispositif d'équerrage-fixation sur la poutre accueillant un bras-réglet droit et un bras-réglet gauche permettant par simple retournement d'être tourné vers l'avant ou vers l'arrière du véhicule si, la caisse n'étant pas horizontale, l'une ou l'autre de ces positions devient obligatoire pour que la pige pendue puisse entrer dans son logement.

8. Dispositif selon la revendication 1 caractérisé en ce que les 2 supports transversaux sont eux-mêmes reliés aux lèvres de bas de caisse (4) par 4 pinces (2) situées aux 4 coins de ces bas de caisse et fixées elles-mêmes à 4 vis (53) réglables en hauteur avec écrou (56) aux fins de réglage d'assiette des 2 supports transversaux.

## Patentansprüche

1. Prüf- und Meßvorrichtung einer Fahrzeugkarosserie, bestehend aus einem auf zwei Querträgern (1) ruhenden axialen Träger (3), senkrecht entlang dem axialen Träger gestaffelten Stellarmen (5), hängenden Pegelstäben (6), die sich senkrecht auf die Stellarme abstützen, und entsprechenden Aufnahmen in den Stellarmen für die hängenden Pegelstäbe nach rechten Winkeln, jedes Mal, wenn ein kontrollierter, relevanter Punkt in Übereinstimmung mit seiner theoretischen Positionierung erreicht wird, dadurch gekennzeichnet, daß die hängenden Pegelstäbe eine Gradeinteilung aufweisen, und mit einer festen Verbindung mit einer Sondervorrichtung ausgerüstet sind, die ihnen doppelachsige Oszillationsmöglichkeiten ermöglicht, wobei diese Sondervorrichtung ihrerseits an eine zentrierte oder selbstzentrierte Mehrzweckzange angeschlossen ist, die sowohl zum Einspannen als auch zum Ausspannen dienen kann und auf den relevanten, zu kontrollierenden Punkten der Karosserie befestigt wird.

2. Vorrichtung nach Anspruch 1, dadurch gekennzeichnet, daß diese Sondervorrichtung ein schweißgeformter Stab (7) des Pegelstabs ist, dessen Profil ermöglicht, Knoten oder Verstärkungen der Karosserie zu vermeiden, wenn sich die Mehrzweckzange über einem der relevanten, zu kontrollierenden Punkte befindet.

3. Vorrichtung nach Anspruch 1, dadurch gekennzeichnet, daß der Formstab sich frei in einem Loch (14) drehen kann, das die Mitte einer Achse (15) durchquert, die sich ihrerseits dreht und die beiden Zangenkörper durchquert.

4. Zentrier- bzw. Selbstzentriervorrichtung der Mehrzweckzange nach Ansprüchen 1 und 3, dadurch gekennzeichnet, daß die um sich selbst drehende Achse (15) der Zange die beiden Hauptkörper der Zange durchquert und entweder außerhalb oder innerhalb der Zange mit 2 exakt symmetrischen und gleichwertigen Federn ausgerüstet ist, oder mit jeglichem anderen Zentrier- oder Selbstzentriersystem, das durch Drücken auf die Bohrungen der Achse zur Aufgabe hat, immer die Mitte dieser Achse in bezug auf die beiden Zangenkörper zu zentrieren, und zwar in jeder Position dieser Körper.

5. Vorrichtung nach Anspruch 1, gekennzeichnet durch die beiden Zangenkörper, die entweder ihre Backenseite mittels Betätigung einer Schraube spannen oder mit forcierter Ausspannung arbeiten, und zwar unter dem Druck einer Feder oder eines anderen, zwischen den beiden Zangenkörpern angeordneten, mechanischen Systems, und die nach Umkehren der Zange den beiden Zangenkörpern ermöglichen, Stützlippen an den Rändern der Kontrollöcher der Längsbalken anzulegen.

6. Vorrichtung nach Anspruch 1, dadurch gekennzeichnet, daß die Aufnahmen für die einzelnen hängenden Pegelstäbe auf jedem, senkrecht entlang dem axialen Träger gestaffelten Stellarm jeweils aus 2 dicken Kontrollplatten bestehen, die in Abständen eines Pegelstabdurchmessers angeordnet und auf einer Seite der Stellarme mit viereckigem oder rechteckigem Querschnitt befestigt sind, um den Pegelstab aufzunehmen, und dem Bediener gleichzeitig die Prüfung der senkrechten Stellung des Pegelstabs/Arms, der Übereinstimmung der Ebene der Platten mit der Längsachse des Pegelstabs und des abgelesenen Werts gegenüber eines auf den Platten vorgesehenen Anzeigers, und schließlich ein etwaiges, automatisches Austreten des Pegelstabs und seines Oszillationsstabs im Falle der Ausfahrbarkeit des axialen Trägers und seiner Stellarme ermöglicht.

7. Vorrichtung nach Ansprüchen 1 bis 6, gekennzeichnet durch die Dicke der Kontrollplatten, die dem hängenden Pegelstab vermeiden, seine Aufnahme problemlos zu verlassen, wenn die Fahrzeugkarosserie schräg in bezug auf die waagerechte Ebene angeordnet ist, jedoch ebenfalls durch die Auslegung der Winkelhaltigkeits-Befestigungs-Vorrichtung auf dem Träger, und die einen rechten und einen linken Stellarm aufnehmen, die durch einfaches Umdrehen ermöglichen, nach vorne oder nach hinten des Fahrzeugs gedreht zu werden, wenn bei nicht waagerechter Karosserie die eine oder andere dieser Positionen zwangsläufig eingenommen werden muß, damit der hängende Pegelstab ist seine Aufnahme eintreten kann.

8. Vorrichtung nach Anspruch 1, dadurch gekennzeichnet, daß die beiden Querträger ihrerseits mit den Lippen des Karosseriebodens (4) verbunden sind, und zwar mittels 4 an den 4 Ecken dieser Karosserieböden angeordneten Zangen (2), die ihrerseits mittels 4 höheneinstellbaren Schrauben (53) mit Einstellmuttern (56) der Auflage der beiden Querträger befestigt sind.

## Claims

1. Vehicle body test and measurement system consisting of axial girder (3) resting on two supporting cross-members (1), arms-rulers (5) located perpendicularly at intervals along the axial girder, suspended measuring rods (6) bearing perpendicularly against the arms-rulers and exactly dimensioned housings made in the arms-rulers, accommodating the suspended measuring rods at right angles whenever a tested remarkable point is positioned in accordance with its theoretical position, characterised in that the suspended measuring rods are graduated and fitted with a rigid coupling to a special device allowing two-axis oscillation capabilities, this special device being itself coupled to a centered or self-centered multi-purpose clip, which can work both on tightening and opening, and attached to the remarkable points of the body to be tested.

2. Device according to claim 1, characterised in that this particular device is a shaped rod (7) welded to the measuring rod, and the profile of which enables avoidance of gussets or body reinforcements when the multi-purpose clip is itself positioned over the remarkable points to be tested.

3. Device according to claim 1, characterised in that the shaped rod can rotate freely in a hole (14) cut transversally through the centre of shaft (15), which itself turns and traverses both bodies of the clip.

4. Device according to claims 1 and 3, for centering or self-centering of the multipurpose clip, characterised in that the revolving shaft (15) of the clip traverses the two main bodies of the clip, and is fitted, either at the outside or at the inside of the clip with two perfectly symmetrical and equivalent springs, or any centering or self-centering system, the function of which, by bearing on the bores of the shaft, is to centre the middle of this shaft with respect to the two bodies of the clip, whatever the position of these bodies.

5. Device according to claim 1, characterised by the 2 clip bodies, either by closing their jaw end by means of a screw, or working on forced opening due to the pressure of a spring or any other mechanical system located between the two clip bodies and, after turning over of the clip, enabling both clip bodies to offer supporting lips for the edges of the side member test holes.

6. Device according to claim 1, characterised in that the housings used to accommodate each suspended rod on each arm-ruler perpendicularly suspended at intervals along the axial girder, each consist of two thick test plates, spaced by the diameter of the measuring rod and attached to one end of the square or rectangular cross-section arms-rulers, enabling the measuring rod to house itself, and the operator to check both the perpendicularity of the measuring rod/arm and the plane of that the plates corresponds to the centering line of the measuring rod; the value read on the measuring rod opposite an index provided on the plates automatically enables possible escape of the measuring rod from its oscillating rod, if the axial girder and its arms-rulers are removed.

7. Device according to claims 1 and 6, characterised by the thickness of the test plates, preventing the suspended measuring rod leaving its housing easily if the vehicle body is canted with respect to the horizontal plane, but also by the design of the squaring-attaching device to the beam, accommodating a right-hand and left-hand arm-ruler enabling, by turnover, to be turned towards the front or rear of the vehicle if, with the body non-horizontal, one or other of these positions becomes obligatory for the suspended rod to enter its housing.

8. Device according to claim 1, characterised in that both the supporting cross-members are themselves coupled to the rocker panel lips (4) by four clips (2) located at the four corners of these rocker panels, and themselves attached to four height-adjustable screws (53) with nuts (56), so as to adjust the level control of the two supporting cross-members.
